(19) Europäisches Patentamt
European Patent Office
Office européen des brevets

(11) Publication number: **0 134 331**
**B1**

(12) **EUROPEAN PATENT SPECIFICATION**

(45) Date of publication of patent specification: **22.07.87**

(51) Int. Cl.$^4$: **B 01 J 29/06**

(21) Application number: **83304715.2**

(22) Date of filing: **15.08.83**

# (54) Treatment of zeolites.

(43) Date of publication of application:
**20.03.85 Bulletin 85/12**

(45) Publication of the grant of the patent:
**22.07.87 Bulletin 87/30**

(84) Designated Contracting States:
**BE DE FR GB IT NL SE**

(56) References cited:
**EP-A-0 022 640**
**US-A-3 644 220**
**US-A-4 361 713**
**US-A-4 374 296**

(73) Proprietor: **MOBIL OIL CORPORATION**
**150 East 42nd Street**
**New York New York 10017 (US)**

(72) Inventor: **Kuehl, Guenter Hinrich**
**1956 Cardinal Lake Drive**
**Cherry Hill New Jersey 08003 (US)**

(74) Representative: **Grundy, Derek George Ritchie et al**
**CARPMAELS & RANSFORD 43, Bloomsbury Square**
**London WC1A 2RA (GB)**

**EP 0 134 331 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to treatment of zeolites to enhance their thermal and hydrothermal stability.

Crystalline aluminosilicate zeolites are well known in the art as exemplified by US—A—3,702,886 (ZSM-5), 3,709,979 (ZSM-11), and 3,832,449 (ZSM-12). The silica/alumina mole ratio of a given zeolite is often variable. For example, zeolite X can be synthesized with a silica/alumina mole ratio of from 2 to 3; and zeolite Y with such ratio of from 3 to 6. Zeolite ZSM-5 is a crystalline material with a virtually unbounded upper limit of silica/alumina mole ratio with a lower limit of at least 5. US—A—4,061,724, 4,073,865 and 4,104,294 describe microporous crystalline silicas or silicates wherein the aluminum content is present at very low levels. Many of these crystalline materials exhibit either good catalytic activity or adequate thermal or hydrothermal stability, but seldom both good activity and stability.

It is known in the art that aluminum ions do not readily exchange into small pore crystalline zeolites by conventional aqueous ion-exchange procedures. The present method permits preparation of small pore crystalline materials containing aluminum, at least part of which is cationic, which have high catalytic activity and improved thermal and hydrothermal stability when compared to such materials which have not been treated thereby.

US—A—3,354,078 and 3,644,220 relate to treating certain crystalline aluminosilicates with volatile metal halides. Neither of these patents is, however, concerned with treatment of crystalline materials having a silica/alumina mole ratio of from about 20 to about 200 and exhibiting a cation exchange capacity of from about 0.17 meq/gram to about 1.6 meq/gram. The pores of the aluminosilicates treated according to the latter patents are generally much larger than those of the crystalline zeolites to be treated in accordance with the present invention. Other differences will be discussed later.

According to the present invention a novel method for improving thermal and hydrothermal stability while providing high catalytic activity of certain zeolites comprises the steps of drying the hydrogen form of the zeolite, contacting the dried zeolite in a dry system with volatile anhydrous aluminum chloride at an elevated temperature, contacting said aluminum chloride contacted material with water vapor under specified conditions and calcining said water vapor contacted material. The resulting crystalline material exhibits catalytic activity and enhanced thermal and hydrothermal stability for numerous chemical reactions, such as, for example, cracking of organic, e.g. hydrocarbon, compounds.

In order to improve the stability of zeolites, according to the invention, aluminum is desirably incorporated therein. It is believed that hydrated aluminum ions are too large to pass through the pores of these materials. Therefore, conventional ion-exchange procedures will not provide ready exchange of aluminum ions into these materials. The present invention provides the solution to this dilemma. At least a portion of the hydroxylated aluminum species formed in this method is believed to occupy the same positions as hydroxoaluminum cations would after an ion-exchange process if it could be conducted.

The invention is carried out by drying the hydrogen form of a crystalline material having a silica/alumina mole ratio of from about 20 to about 200, preferably from about 20 to about 100, a pore size in the range 0.4 to 0.7 nm, and exhibiting a total cation exchange capacity of from about 0.17 to about 1.6 meq/gram measured by thermogravimetric analysis, preferably from about 0.33 to about 1.6 meq/gram, such as by heating the same at a temperature within the range of about 100°C to 600°C in an anhydrous atmosphere of air, nitrogen, etc. at atmospheric, superatmospheric or subatmospheric pressures for between 1 minute and 48 hours. The dried material is thereafter contacted with anhydrous aluminum chloride vapor in a dry environment at a temperature of from about 100°C to about 850°C, preferably from about 180°C to about 500°C. In fact, a minimum temperature of 180°C is required for this step when conducted at atmospheric pressure.

The aluminum chloride contacted crystalline material is then hydrolyzed by contact with water vapor at a temperature of from about 100°C to about 550°C. The water vapor may be carried by a carrier medium such as nitrogen or other inert gas and the pressure will be adjusted to maintain the water as vapor. The hydrolyzed crystalline material is then calcined at a temperature of from about 200°C to about 600°C in an inert atmosphere of air, nitrogen, etc. at subatmospheric, atmospheric or superatmospheric pressures for from about 1 minute to about 48 hours.

The anhydrous aluminum chloride contacting step may be accomplished by admixture of the aluminum chloride reagent with a dry inert gas such as nitrogen or air at temperatures ranging from about 100°C to about 850°C, preferably from about 180°C to about 500°C. The amount of aluminum chloride vapor which is utilized is not narrowly critical but usually from about 0.05 to about 0.5 grams of aluminum chloride are used per gram of small pore crystalline starting material.

The zeolites treated according to the invention are those having pore sizes within the range of from about 0.4 to about 0.7 nm. By comparison, it is noted that the pores of synthetic faujasite zeolite Y are 0.8 to 0.9 nm in size. "Dry environment" in the aluminum chloride contacting step is limited to an environment or system containing less than 1 mmHg of water. Also, the hydrogen form of the zeolite can be produced by calcining the organic cation containing crystalline material in a conventional manner or by exchange of original cations therein by means known in the art, including contact with ammonium salt solutions or acid solutions followed by washing, drying and calcining. The latter means may involve contacting the crystalline material with an aqueous solution of an ammonium salt, e.g. $NH_4NO_3$, or an acid, e.g. HCl, for a period of time of from about 1 hour to about 20 hours at a temperature of from about ambient to about

100°C. The ammonium salt used is not narrowly critical and will normally be an inorganic salt such as ammonium nitrate, ammonium sulfate, ammonium chloride, etc. The acid used will normally be an organic or inorganic acid such as acetic acid, hydrochloric acid, nitric acid, etc.

Of the zeolites advantageously treated in accordance herewith, zeolites ZSM-5, ZSM-11 and ZSM-5/ZSM-11 intermediate are particularly noted. ZSM-5 is described in US—A—3,702,886 and Re 29,948. ZSM-11 is described in US—A—3,709,979. The ZSM-5/ZSM-11 intermediate is described in US—A—4,229,424. Other such crystalline materials include zeolites ZSM-12, ZSM-22, ZSM-23, ZSM-35, ZSM-38, ZSM-48 and ZSM-50.

Zeolite ZSM-12 is described in US—A—3,832,449. ZSM-23 is described in US—A—4,076,842. ZSM-35 and ZSM-38 are described in US—A—4,016,242 and 4,046,859, respectively.

Zeolite ZSM-22 frequently has the composition, in terms of moles of oxides, after dehydration, per 100 moles of silica, as follows:

$$(x)Q_2O:(y)M_{2/n}O:(z)Al_2O_3:100SiO_2$$

wherein $Q_2O$ is the oxide form of an organic compound containing an element of Group VA of the Periodic Table of the Elements, e.g. N or P, preferably N, containing at least one alkyl or aryl group having at least 2 carbon atoms, M is an alkali metal or an alkaline earth metal having a valence n, and x=0.01—2.0, y=0—2.0 and z=0—5. It is defined by the X-ray diffraction pattern shown below:

Most significant lines of zeolite ZSM-22

| d (A) (1A=0.1nm) | Relative intensity (I/Io) |
|---|---|
| 10.9 +0.2 | M-VS |
| 8.7 +0.16 | W |
| 6.94+0.10 | W-M |
| 5.40+0.08 | W |
| 4.58+0.07 | W |
| 4.36+0.07 | VS |
| 3.68+0.05 | VS |
| 3.62+0.05 | S-VS |
| 3.47+0.04 | M-S |
| 3.30+0.04 | W |
| 2.74+0.02 | W |
| 2.52+0.02 | W |

These values were determined by standard techniques. The radiation was the K-alpha doublet of copper and a diffractometer equipped with a scintillation counter and an associated computer was used. The peak heights, I, and the positions as a function of 2 theta where theta is the Bragg angle, were determined using algorithms on the computer associated with the spectrometer. From these, the relative intensities, 100 $I/I_o$, where $I_o$ is the intensity of the strongest line or peak, and d (obs), the interplanar spacing in Angstroms (A) corresponding to the recorded lines, were determined. In the foregoing table, the relative intensities are given in terms of the symbols VS=very strong, S=strong, M=medium, W=weak, etc. It should be understood that this X-ray diffraction pattern is characteristic of all the species of ZSM-22 zeolite compositions. Ion exchange of the alkali metal cations with other ions result in a zeolite which reveals substantially the same X-ray diffraction pattern with some minor shifts in interplanar spacing and variation in relative intensity. Other minor variations can occur, depending on the silica to alumina ratio of the particular sample, as well as its degree of thermal treatment.

ZSM-22 can be suitably prepared from a reaction mixture containing a source of silica, $Q_2O$, an alkali metal oxide, e.g., sodium, potassium or cesium, water, and alumina, and having a composition, in terms of mole ratios of oxides, falling within the following ratios:

| Reactants | Broad | Preferred |
|---|---|---|
| $SiO_2/Al_2O_3$ | 20 to ∞ | 30 to 1000 |
| $M_{2/n}O/(Q_2O+M_{2/n}O)$ | 0 to 0.95 | 0.1 to 0.8 |

wherein $Q_2O$, M and n are as above defined, and maintaining the mixture at crystallization temperatures, such as from about 80°C to about 200°C, until crystals of ZSM-22 are formed.

Zeolite ZSM-48 frequently has the composition, in terms of moles of anhydrous oxides per 100 moles of silica as follows: (0.05 to 5) $N_2O$: (0.1 to 10) $M_{2/n}O$: (0 to 4) $Al_2O_3$:(100)$SiO_2$ wherein M is at least one cation having a valence n, N is a mixture of a $C_2$—$C_{12}$, and more preferably of a $C_3$—$C_5$, alkylamine and a tetramethylammonium compound. It is defined by the distinctive X-ray diffraction pattern as shown below:

Characteristic lines of zeolite ZSM-48

| d (A) (1A)=0.1nm) | Relative intensity (I/Io) |
|---|---|
| 11.8 +0.2 | S |
| 10.2 +0.2 | W-M |
| 7.2 +0.15 | W |
| 4.2 +0.08 | VS |
| 3.9 +0.08 | VS |
| 3.6 +0.06 | W |
| 3.1 +0.05 | W |
| 2.85+0.05 | W |

These values were determined by standard techniques. The radiation was the K-alpha doublet of copper, and a diffractometer equipped with a scintillation counter and a strip chart pen recorder was used. The peak heights, I, and the positions as a function of two times theta, where theta is the Bragg angle, were read from the spectrometer chart. From these, the relative intensities, 100 $I/I_o$, where $I_o$ is the intensity of the strongest line or peak, and d (obs.), the interplanar spacing in Angstroms (A) corresponding to the recorded lines, were calculated. In the foregoing table the relative intensities are given in terms of the symbols VS=very strong, S=strong, W=weak, and W-M=weak-to-medium (depending on the cationic form). Ion exchange of the sodium ion with cations reveals substantially the same pattern with some minor shifts in interplanar spacing and variation in relative intensity. Other minor variations can occur depending on the silicon to aluminium ratio of the particular sample, as well as if it has been subjected to thermal treatment.

ZSM-48 can be prepared from a reaction mixture containing a source of silica, tetramethylammonium compound, $C_2$—$C_{12}$ alkylamine, an alkali metal oxide, e.g. sodium, with or without a source of alumina, and water, and having a composition, in terms of mole ratios of oxides, falling within the following ranges:

| Reactants | Broad | Preferred |
|---|---|---|
| $Al_2O_3/SiO_2$ | 0 to 0.08 | 0 to 0.02 |
| $Na_2O/SiO_2$ | 0.01 to 1.0 | 0.1 to 0.5 |
| $N_2O/SiO_2$ | 0.005 to 0.5 | 0.005 to 0.25 |
| $OH^-/SiO_2$ | 0.01 to 0.5 | 0.05 to 0.2 |
| $H_2O/SiO_2$ | 10 to 200 | 20 to 100 |

wherein N is a mixture of a $C_2$—$C_{12}$ alkylamine and tetraammonium compound, and maintaining the mixture at 80—200°C until crystals of ZSM-48 are formed.

The molar ratio of $C_2C_{12}$ alkylamine to tetraammonium compound is not usually narrowly critical and can range from 1:1 to 10:1. The tetramethylammonium compound can include the hydroxide or halide with the chloride being particularly preferred.

Zeolite ZSM-50 can be identified, in terms of moles of anhydrous oxides per 100 moles of silica, as follows:

$$(0\text{—}10)M_{2/n}O:(1\text{—}5)Al_2O_3:(100)SiO_2$$

wherein M is at least one cation having a valence n, and wherein the zeolite is characterized by a distinctive X-ray diffraction pattern substantially as shown below:

Significant lines of zeolite ZSM-50

| d (A) (1A=0.1nm) | Relative intensity, I/Io |
|---|---|
| 20.1 +.3 | W |
| 11.1 +.17 | S |
| 10.1 +.16 | M |
| 9.7 +.14 | W |
| 5.77+.09 | W |
| 5.61+.09 | W |
| 4.64+.07 | M |
| 4.35+.07 | M |
| 4.30+.07 | VS |
| 4.00+.06 | S |
| 3.85+.06 | M |
| 3.70+.06 | M |
| 3.42+.05 | W |
| 3.35+.05 | W |
| 3.27+.05 | M |
| 3.24+.05 | W |
| 2.94+.04 | W |
| 2.53+.04 | W |

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms in the computer associated with the spectrometer. From these, the relative intensities, 100 $I/I_o$, where $I_o$ is the intensity of the strongest line or peak, and d (obs.) the interplanar spacing in Angstrom Units (A), corresponding to the recorded lines, were determined. In Table 1, the relative intensities are given in terms of the symbols W=weak, M=medium, S=strong and VS=very strong. In terms of intensities, these may be generally designated as follows:

W= 0—20
M=20—40
S=40—60
VS=60—100

In the synthesized form, zeolite ZSM-50 has a formula, on an anhydrous basis and in terms of moles of oxides per 100 moles of silica as follows:

$$(0\text{—}4)R_2O:(0\text{—}10)M_{2/n}O:(1\text{—}5)Al_2O_3:(100)SiO_2$$

wherein M is an alkali or alkaline earth metal, n is the valence of M, and R is an organic cation of a Group VA element of the Periodic Table of the Elements, particularly that derived from a linear diquaternary ammonium, phosphonium, arsonium, stibonium or bismuthonium compound having the general formula:

$$[X(R')_3M'(Z)_mM'(R')_3X]$$

wherein R' is alkyl of from 1 to 6 carbon aroms, heteroalkyl of from 1 to 7 carbon atoms, aryl, heteroaryl, cycloalkyl of from 3 to 8 carbon atoms, cycloheteroalkyl of from 3 to 9 carbon atoms or combinations thereof; M' is a quadricoordinate element (e.g. nitrogen, phosphorus, arsenic, antimony or bismuth) or a heteroatom (e.g. N, O, S, Se, P, As, etc.) in an alicyclic, heteroalicyclic or heteroaromatic structure; X is an anion (e.g. fluoride, chloride, bromide, iodide, hydroxide, acetate, sulfate, carboxylate, etc.); Z is a bridging member selected from the group consisting of alkyl of from 1 to 4 carbon atoms, alkenyl of from 2 to 10 carbon atoms, aryl, heteroalkyl of from 1 to 6 carbon atoms, heteroalkenyl of from 2 to 8 carbon atoms and heteroaryl, and m is an integer of from about 1 to 10.

Zeolite ZSM-50 can be prepared from a reaction mixture containing sources of an alkali or alkaline earth metal oxide, an oxide of aluminium, an oxide of silicon, an organic cation of a Group VA element of the Periodic Table and water and having a composition, in terms of mole ratios of oxides, falling within the following ranges:

| Reactants | Useful | Preferred |
|---|---|---|
| $SiO_2/Al_2O_3$ | 20—100 | 30—90 |
| $OH^-/SiO_2$ | 0.1—0.6 | 0.1—0.3 |
| $R/SiO_2$ | 0.05—0.6 | 0.1—0.3 |
| $M/SiO_2$ | 0.01—1.0 | 0.1—0.6 |

wherein R and M are as above defined.

Crystallization of zeolite ZSM-50 can be carried out at either static or stirred condition in a suitable reactor vessel, such as for example, polypropylene jars or teflon lined or stainless steel autoclaves. The total useful range of temperatures for crystallization is from about 100°C to about 200°C for a time of about 48 hours to about 15 days. Thereafter, the crystals are separated from the liquid and recovered. The composition can be prepared utilizing materials which supply the appropriate oxides. Such compositions may include sodium silicate, silica hydrosol, silica gel, silicic acid, sodium hydroxide, a source of aluminum, and an appropriate organic compound containing an element of Group VA, such as nitrogen or phosphorus.

The stability enhanced crystalline materials prepared by the present method are useful as catalyst components for a variety of organic, e.g. hydrocarbon, compound conversion processes. Such conversion processes include, as non-limiting examples, cracking hydrocarbons with reaction conditions including a temperature of from about 300°C to about 700°C, a pressure of from about 0.1 atmosphere (bar) to about 30 atmospheres (30.4 bar) and a weight hourly space velocity of from about 0.1 to about 20; dehydrogenating hydrocarbon compounds with reaction conditions including a temperature of from about 300°C to about 700°C, a pressure of from about 0.1 atmosphere (bar) to about 10 atmospheres (10.2 bar) and a weight hourly space velocity of from 0.1 to about 20; converting paraffins to aromatics with reaction conditions including a temperature of from about 100°C to about 700°C, a pressure of from about 0.1 atmosphere to about 60 atmospheres (60.8 bar), a weight hourly space velocity of from about 0.5 to about 400 and a hydrogen/hydrocarbon mole ratio of from about 0 to about 20; converting olefins to aromatics, e.g. benzene, toluene and xylenes, with reaction conditions including a temperature of from about 100°C to about 700°C, a pressure of from about 0.1 atmosphere to about 60 atmospheres (60.8 bar), a weight hourly space velocity of from about 0.5 to about 400 and a hydrogen/hydrocarbon mole ratio of from about 0 to about 20; converting alcohols, e.g. methanol, or ethers, e.g. dimethylether, or mixtures thereof to hydrocarbons including aromatics with reaction conditions including a temperature of from about 275°C to about 600°C, a pressure of from about 0.5 atmosphere to about 500 atmospheres (506.9 bar) and a liquid hourly space velocity of from about 0.5 to about 100; isomerizing xylene feedstock components with reaction conditions including a temperature of from about 230°C to about 510°C, a pressure of from about 3 atmospheres to about 35 atmospheres (35.5 bar), a weight hourly space velocity of from about 0.1 to about 200 and a hydrogen/hydrocarbon mole ratio of from about 0 to about 100; disproportionating toluene with reaction conditions including a temperature of from about 200°C to about 760°C, a pressure of from about atmospheric to about 60 atmospheres (60.8 bar) and a weight hourly space velocity of from about 0.08 to about 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from about 340°C to about 500°C, a pressure of from about atmospheric to about 200 atmospheres (202.8 bar), a weight hourly space velocity of from about 2 to about 2000 and an aromatic

hydrocarbon/alkylating agent mole ratio of from about 1/1 to about 20/1; and transalkylating aromatic hydrocarbons in the presence of polyalkylaromatic hydrocarbons with reaction conditions including a temperature of from about 340°C to about 500°C, a pressure of from about atmospheric to about 200 atmospheres (202.8 bar), a weight hourly space velocity of from about 10 to about 1000 and an aromatic hydrocarbon/polyalkylaromatic hydrocarbon mole ratio of from about 1/1 to about 16/1.

In practising a particularly desired chemical conversion process, it may be useful to incorporate the above-described stability enhanced crystalline material with a matrix comprising another material resistant to the temperature and other conditions employed in the process. Such matrix material is useful as a binder and imparts greater resistance to the catalyst for the severe temperature, pressure and reactant feed stream velocity conditions encountered in, for example, many cracking processes. Useful matrix materials are described in our EP—A—1695.

The following examples illustrate the invention.

Example 1

A zeolite having the crystal structure of ZSM-5 was synthesized according to US—A—3,702,886 from a reaction mixture containing a source of tetrapropylammonium ions. The crystal product, having a silica/alumina mole ratio of 40 and a total cation exchange capacity of 0.8 meq/gram was calcined in nitrogen, treated with 0.5 N $NH_4NO_3$, washed with water and dried by calcining in air for 3 hours at 538°C to provide the hydrogen form of zeolite ZSM-5.

Example 2

About 10 grams of the dried hydrogen form of zeolite ZSM-5 prepared in Example 1 was sized 14—25 mesh and placed in a tube furnace. Anhydrous $AlCl_3$ was positioned in the preheat zone in a glove-bag flushed with pre-dried nitrogen. The reactor tube was heated at 150°C in a stream of pre-dried nitrogen for 16 hours in order to remove any moisture adsorbed on the zeolite. The temperature was then gradually raised to 200°C. The evaporating $AlCl_3$ reacted with the hydrogen zeolite releasing HCl. The temperature was held at 200°C for one hour, then increased to 250°C. When all $AlCl_3$ had disappeared from the preheat zone, the temperature was raised to 550°C and held for three hours in order to desorb physically sorbed $AlCl_3$.

The reactor was cooled to ambient temperature and a sample was taken for chemical analysis. This material contained 8.3 wt. % $Al_2O_3$, 4.2 wt. % Cl and 95.4 wt. % ash. The Cl/Al atomic ratio was about 1.3 indicating that the introduced aluminum carried between one and two chlorine atoms per aluminum. The data also show that more Al was introduced than was present in the framework.

The zeolite remaining in the tube furnace was then heated to 538°C. Dry nitrogen loaded with water vapor by bubbling through water at ambient temperature was then streamed through the tube. The contacting was continued until the effluent gas was neutral. A sample of the product zeolite had the following composition:

| | |
|---|---|
| 87.5 wt. % | $SiO_2$ |
| 8.7 wt. % | $Al_2O_3$ |
| 0.01 wt. % | Cl |

Since the framework $Al_2O_3$ content for 87.5 wt. % $SiO_2$ and a $SiO_2/Al_2O_3$ molar ratio of 40 is only 3.7 wt.%, about 5.0 wt.% $Al_2O_3$ was introduced to the ZSM-5 by the present method.

Example 3

In order to confirm improved stability, equal aliquots of the crystalline material products of Examples 1 and 2 were evaluated for n-hexane cracking activity in the Alpha Test both before and after severe steaming for 2 hours at 593°C. The results were as follows:

| Material from | Alpha value Before steaming | Alpha value After steaming | Percent decrease |
|---|---|---|---|
| Example 1 | 267 | 25 | 90.6 |
| Example 2 | 230 | 50 | 78.2 |

The Alpha Test is described in The Journal of Catalysis, Vol. IV, pp. 522—529 (August 1965).

It is emphasized that the present invention involves treatment of zeolites having a substantial cation exchange capacity with a silica/alumina mole ratio as low as 20 resulting not necessarily in a higher activity, but in better steam stability. Vapor-phase ion-exchange is the suspected mechanism of this invention as a means to stabilize the anionic $AlO_4$ sites in the zeolite framework, and reduction of the activity is the normal

result of replacing $H^+$ with Al-containing cations. The relatively high Alpha Value found after severe steaming (50 vs 25) demonstrates that such stabilization occurs. However, since more aluminum was introduced than can be explained by ion-exchange, it is assumed that, in addition to ion-exchange, non-cationic aluminum is introduced. The present method employs hydrolysis in the presence of water vapor to reduce the chloride content of the final product crystalline material to less than 0.1 wt. %, e.g. 0.01 wt.% in Example 2 above.

**Claims**

1. A method for enhancing the stability of a zeolite siliceous material having a silica/alumina mole ratio of 20 to 200, a pore size in the range 0.4 to 0.7 nm, and a total cation exchange capacity of 0.17 meq/gram to 1.6 meq/gram which comprises drying the hydrogen form of said material, contacting the dried material with anhydrous aluminum chloride vapor in a dry environment at a temperature of from 100°C to 850°C, hydrolyzing the aluminum chloride vapor contacted material by contact with water vapor at a temperature of from 100°C to 550°C and then calcining the hydrolyzed material at a temperature of from 200°C to 600°C.

2. The method of claim 1 wherein the product has a chloride ion content less than 0.1 weight percent.

3. The method of claim 1 or claim 2 wherein said silica/alumina mole ratio is from about 20 to about 100 and said total cation exchange capacity is from about 0.33 meq/gram to about 1.6 meq/gram.

4. The method of any preceding claim wherein said drying comprises heating said hydrogen form of said material at a temperature of 100°C to 600°C in an anhydrous atmosphere.

5. The method of any preceding claim wherein said aluminum chloride vapor contacting step is conducted at a temperature of 180°C to 500°C.

6. The method of claim 1 wherein the zeolite is ZSM-5, ZSM-11, ZSM-5/ZSM-11 intermediate, ZSM-12, ZSM-22, ZSM-23, ZSM-35, ZSM-38, ZSM-48 or ZSM-50.

7. A method for converting an organic compound which comprises contacting said organic compound at conversion conditions with a catalyst comprising a zeolite treated in accordance with any of claims 1 to 6.

**Patentansprüche**

1. Verfahren zur Erhöhung der Stabilität eines siliciumhaltigen Zeolithmaterials mit einem Siliciumdioxid/Aluminium-oxid-Molverhältnis von 20 bis 200, einer Porengröße im Bereich von 0,4 bis 0,7 nm und einer gesamten Kationenaustauschkapazität von 0,17 Milliäquivalent/g bis zu 1,6 Milliäquivalent/g, welches das Trocknen der Wasserstofform des Materials, den Kontakt des getrockneten Materials mit wasserfreiem Aluminiumchloriddampf in einer trockenen Umgebung bei einer Temperatur von 100°C bis 850°C, die Hydrolyse des mit diesem Material in Kontakt gestandenen Aluminiumchloriddampfes durch Kontakt mit Wasserdampf bei einer Temperatur von 100°C bis 550°C und das anschließende Calzinieren dieses hydrolysierten Materials bei einer Temperatur von 200°C bis 600°C umfaßt.

2. Verfahren nach Anspruch 1, worin das Produkt einen Chloridionengehalt von weniger als 0,1 Gew.% aufweist.

3. Verfahren nach Anspruch 1 oder 2, worin das Siliciumdioxid/Aluminiumoxid-Molverhältnis von etwa 20 bis etwa 100 beträgt und die gesamte Kationenaustauschkapazität von etwa 0,33 Milliäquivalent/g bis etwa 1,6 Milliäquivalent/g beträgt.

4. Verfahren nach einem der vorstehenden Ansprüche, worin das Trocknen das Erwären der Wasserstofform des Materials bei einer Temperatur von 100°C bis 600°C in einer wasserfreien Atmosphäre umfaßt.

5. Verfahren nach einem der vorstehenden Ansprüche, worin der Schritt des Kontaktes mit Aluminiumchloriddampf bei einer Temperatur von 180°C bis 500°C durchgeführt wird.

6. Verfahren nach Anspruch 1, worin der Zeolith ZSM-5, ZSM-11, ZSM-5/ZSM-11-Zwischenprodukt, ZSM-12, ZSM-22, ZSM-23, ZSM-35, ZSM-38, ZSM-48 oder ZSM-50 ist.

7. Verfahren zur Umwandlung einer organischen Verbindung, welches den Kontakt der organischen Verbindung unter Umwandlungsbedingungen mit einem Katalysator umfaßt, der einen nach einem der Ansprüche 1 bis 6 behandelten Zeolith umfaßt.

**Revendications**

1. Une méthode d'amélioration de la stabilité d'un matériau siliceux zéolitique dont le rapport molaire silice/alumine est compris entre 20 et 200, la dimension des pores est comprise entre 0,4 et 0,7 nm et la capacité totale d'échange cationique est comprise entre 0,17 méq/g et 1,6 méq/g, qui consiste à sécher la forme protonée de ce matériau, à mettre le matériau séché au contact de la vapeur de chlorure d'aluminium anhydre dans un environnement sec, à une température de 100°C à 850°C, à hydrolyser le matériau mis au contact de la vapeur de chlorure d'aluminium en le mettant en contact avec de la vapeur d'eau à une température de 100°C à 550°C et à calciner ensuite le matériau hydrolysé à une température de 200°C à 600°C.

2. La méthode selon la revendication 1, dans laquelle le produit a une teneur en ions chlorure inférieure à 0,1% en poids.

3. La méthode selon la revendication 1 ou 2, dans laquelle ce rapport molaire silice/alumine est compris entre environ 20 et environ 100 et cette capacité totale d'échange cationique est comprise entre environ 0,33 méq/g et environ 1,6 méq/g.

4. La méthode selon l'une quelconque des revendications précédentes, dans laquelle ce séchage consiste à chauffer cette forme protonée de ce matériau à une température de 100°C à 600°C dans une atmosphère anhydre.

5. La méthode selon l'une quelconque des revendications précédentes, dans laquelle cette étape de mise en contact de la vapeur avec la vapeur de chlorure d'aluminium est effectuée à une température de 180°C à 500°C.

6. La méthode selon la revendication 1, dans laquelle la zéolite est une ZSM-5, une ZSM-11, un intermédiaire ZSM-5/ZSM-11, ZSM-12, ZSM-22, ZSM-23, ZSM-35, ZSM38, ZSM-48 ou ZSM-50.

7. La méthode de conversion d'un composé organique qui consiste à mettre ce composé organique dans des conditions de conversion au contact d'un catalyseur comprenant une zéolite traitée selon l'une quelconque des revendications 1 à 6.